# EUROPÄISCHE PATENTSCHRIFT

(11) **EP 0 407 969 B1**
(45) Veröffentlichungstag und Bekanntmachung des Hinweises auf die Patenterteilung: **06.10.1993**
(21) Anmeldenummer: 90113158.1
(22) Anmeldetag: 10.07.1990
(51) Int. Cl.: B23K 26/00, B23K 26/08

(54) **Verfahren und Vorrichtung zum Herstellen von Hohlräumen in Werkstücken mittels Laserstrahls**
Process and device for manufacturing hollow spaces in workpieces using a laser beam
Procédé et dispositif pour réaliser des espaces creux dans les pièces à usiner au moyen d'un faisceau laser

(30) Priorität: 14.07.1989 DE 3923356; 02.10.1989 DE 8911733 U
(43) Veröffentlichungstag der Anmeldung: 16.01.1991
(73) Patentinhaber: MAHO Aktiengesellschaft, D-87459 Pfronten (DE)
(72) Erfinder: Babel, Werner, D-8962 Pfronten (DE); Grund, Peter,Dr.-Ing., D-8959 Rieden (DE); Eberl, Günter,Dr.-Ing., D-8963 Waltenhofen/Lanzen (DE); Sutor, Uli,Dipl.-Phys., D-8962 Pfronten (DE)
(74) Vertreter: Beetz & Partner Patentanwälte

(56) Entgegenhaltungen:
- WO-A-90/01391
- GB-A- 2 074 084
- US-A- 4 644 126
- PATENT ABSTRACTS OF JAPAN vol. 8, no. 152 (M-309)(1589) 14 Juli 1984, & JP-A-59 47086 (MITSUBISHI DENKI K.K.) 16 März 1984,

## Beschreibung

Die Erfindung betrifft Verfahren zum Herstellen von Hohlräumen in massiven Werkstücken mittels eines Laserstrahls, bei dem das Material durch hin- und hergehende Vorschubbewegungen in dicht nebeneinander liegenden Führungsbahnen vom Laserstrahl abgetragen wird (siehe JP-A-59-47086).

Ferner bezieht sich die Erfindung auf eine Werkzeugmaschine gemäß dem Oberbegriff des Anspruchs 11 und eine Werkzeugmaschine gemäß dem Oberbegriff des Anspruchs 12 (siehe GB-A-2 074 084).

Die Herstellung von größeren taschen- bzw. kammerförmigen Hohlräumen in massiven Werkstücken, insbesondere von Gesenken und Formwerkzeugen, erfolgt bisher in der Regel durch elektroerosive und/oder spanende Materialabtragung von dem auf einem motorisch verfahrbaren Tisch aufgespannten Werkstück. Mit der Entwicklung leistungsstarker Laserstrahl-Anlagen ist deren Anwendungsbereich auch auf die Werkstückabtragung erweitert worden.

So ist beispielsweise aus dem DE-GM 87 01 354.1 ein Verfahren bekannt, bei dem jeweils zwei gegensinnig geneigte und sich auf einer Linie kreuzende Schrägschnitte in das Werkstück eingebracht werden. Durch anschließendes Einbringen von stirnseitigen Schnitten entstehen langgestreckte keilförmige Segmente, die nach ihrem Herausheben prismatische Ausnehmungen freigeben. Die jeweils zwischen zwei benachbarten Ausnehmungen verbleibenden langgestreckten Höcker werden durch nachfolgende artgleiche Schneidvorgänge mit gegensinnig geneigtem Laserstrahl entfernt. Es hat sich jedoch gezeigt, daß mit diesem Verfahren ein ebener und ausreichend glatter Boden der Ausnehmung nicht hergestellt werden kann. Darüber hinaus können sich im Bereich der sich kreuzenden Schneidlinien Schweißverbindungen durch wieder erstarrendes Material ergeben, welche ein Herausheben der geschnittenen Segmente verhindern.

Aus der DE 24 43 334 A1 ist ein Verfahren und eine Vorrichtung zum Gravieren von Oberflächen mit einem Laserstrahl bekannt, bei welcher der Laserstrahl in dicht nebeneinander liegenden parallelen Linien die Werkstückoberfläche überstreicht und dabei das Material aus der herzustellenden Gravur abträgt. Bei einem ähnlichen Vorgehen zur Herstellung flacher Ausnehmungen in keramischen Werkstücken gemäß der JP-OS 59-47 086 wird das Material durch den hin- und hergehenden Laserstrahl in dicht nebeneinander liegenden Bahnen erschmolzen und mittels eines Druckfluids entfernt. Mit diesen bekannten Verfahren lassen sich jedoch tiefere Ausnehmungen mit senkrechten oder hinterschnittenen Seitenwänden nicht herstellen. Im Bereich der Seitenwände ergeben sich nämlich veränderte Absorptions- und Reflexionsbedingungen für den senkrecht zur Werkstückoberfläche auftreffenden Laserstrahl, die dazu führen, daß die Seitenwand nicht senkrecht zur Werkstückoberfläche sondern mit einer gewissen Neigung nach innen verläuft. Bei gravurähnlichen Ausnehmungen von geringer Tiefe können diese Seitenwandneigungen und auch eine abgerundete Kehle im Seitenwandgrund akzeptiert werden. Bei tieferen Ausnehmungen sind jedoch derartig geneigte Innenwände häufig unerwünscht.

Aus der DE 35 44 396 A1 ist ein Verfahren zur Herstellung von Öffnungen mit schrägen Schnittkanten in Blechformkörpern bekannt, bei dem das Werkstück in einem vorgegebenen spitzen Winkel zur Längsachse eines Laserarbeitsstrahls positioniert und die durchgehende Öffnung durch ein- oder mehrmaliges zeilenförmiges Abrastern in das Blech eingeschnitten wird.

In der CH 453 523 ist eine Laser-Schneidmaschine beschrieben, die einen motorisch hin- und herbewegbaren Werkstücktisch, eine Laseranlage mit Laserquelle, motorisch bewegbare Strahlführungs- und Fokussierelemente sowie eine Programmsteuerung für die Laseranlage und die Vorschubmotoren aufweist. Zum Schneiden von schlitzförmigen Öffnungen formen die Strahlführungselemente den ursprünglich kreisförmigen Querschnitt des Laserstrahls zu einem rechteckigen Querschnitt um.

Ferner ist aus der GB-A-2 074 084 eine Vorrichtung zum Beschneiden von Kanten und zum Herstellen von Öffnungen in dreidimensionalen Hohlformen mittels Laserstrahls bekannt, bei welcher der Laserkopf einer Laseranlage und die zu entgratende Hohlform in fünf Achsen entlang der zu bearbeitenden Kanten und/oder der schlitzförmigen Öffnungen in fünf Achsen gegeneinander relativ verschiebbar angeordnet sind. Der Laserkopf ist am Ende eines verschwenkbaren Abschnitts eines vertikalen Teleskoprohrs montiert, das an der Stirnseite eines horizontalen Trägers befestigt ist. Die zu bearbeitende Hohlform ist auf einem Werkstücktisch aufgespannt, der in zwei Achsen der horizontalen Koordinatenebene motorisch verfahren werden kann. Diese bekannte Vorrichtung ist zur Schneidbearbeitung von hohlen Werkstücken konzipiert, wobei die Öffnungen herausgeschnitten werden. Durch eine Bodenfläche begrenzte Hohlräume in massiven Werkstücken lassen sich mit dieser bekannten Vorrichtung nicht ohne weiteres herstellen.

Aufgabe der Erfindung ist es, ein Verfahren und eine Werkzeugmaschine zum Herstellen von Hohlräumen in massiven Werkstücken mittels Laserstrahls aufzuzeigen, mit dem auch tiefere Ausnehmungen mit relativ glatten, zur Werkstückoberfläche senkrechten oder hinterschnittenen Seitenwänden und mit ebenem glatten Boden hergestellt werden können.

Diese Aufgabe wird bei einem ersten, auf dem Verfahren der eingangs genannten Art aufbauenden Lösungsvorschlag dadurch gelöst, daß der Laserstrahl während jedes linienförmigen Abtragsvorgangs um einen vorgegebenen Winkel geschwenkt wird, so daß sich sein Bearbeitungspunkt auf einer kreisbogenförmigen Bahn bewegt und der Laserstrahl am Ende jedes linearen Abtragsvorganges eine relative Schräglage zum Werkstück einnimmt, daß das Werkstück während jeder Schwenkbewegung des Laserstrahls auf einem Kreisbogen um die Schwenkachse des Laserstrahls translatorisch derart hin- und herbewegt wird, daß die Lage des Bearbeitungspunktes im Werkstück auf gleichem Niveau bleibt und sich eine gleichmäßige Relativgeschwindigkeit des Werkstücks gegenüber dem Laserstrahl ergibt, und daß nach dem Abtragen einer Materialschicht diese linienförmigen Abtragsvorgänge bis zum Erreichen der vorgegebenen Endtiefe des Hohlraums wiederholt werden.

Eine zweite erfindungsgemäße Lösung zeichnet sich dadurch aus, daß der Laserstrahl während jedes linienförmigen Abtragsvorganges translatorisch hin- und herbewegt wird, so daß sich sein Bearbeitungspunkt auf einer geradlinigen Bahn bewegt, daß das Werkstück während jedes Abtragsvorganges eine Schwenkbewegung um eine zum Laserstrahl senkrechte Achse und eine damit kombinierte Hubbewegung in einer zum Laserstrahl parallelen Richtung ausführt, so daß die Lage des Bearbeitungspunktes im Werkstück auf gleichbleibendem Niveau bleibt, der Laserstrahl am Ende jedes linearen Bearbeitungsvorganges eine relative Schräglage gegenüber dem Werkstück einnimmt und eine gleichmäßige Relativgeschwindigkeit zwischen dem Werkstück und dem Laserstrahl eingehalten wird, und daß nach dem Abtragen einer Materialschicht diese linienförmigen Abtragsvorgänge bis zum Erreichen der vorgegebenen Endtiefe des Hohlraums wiederholt werden.

Ein dritter Lösungsweg zeichnet sich dadurch aus, daß das Werkstück während jedes linearen Abtragsvorganges um eine vertikale Achse in einem vorgegebenen Winkel verschwenkt und gleichzeitig der Brennpunkt des fokussierten Laserstrahls in der Strahlachse verschoben wird, so daß die Lage des Bearbeitungspunktes im Werkstück auf gleichbleibendem Niveau bleibt, der Laserstrahl am Ende jedes linearen Bearbeitungsvorganges eine relative Schräglage gegenüber dem Werkstück einnimmt und eine gleichmäßige Relativgeschwindigkeit des Laserstrahls gegenüber dem Werkstück eingehalten wird, und daß nach dem Abtragen einer Materialschicht diese linienförmigen Abtragsvorgänge bis zum Erreichen der vorgegebenen Endtiefe des Hohlraums wiederholt werden.

Durch die erfindungsgemäße Verknüpfung der verschiedenen Bewegungsarten des Laserstrahls und des Werkstücktisches trifft der Laserstrahl unter einem einstellbaren Winkel auf das Werkstück auf, wobei die Lage des Bearbeitungspunktes bzw. Brennflecks im Werkstück in gleichbleibendem Niveau bleibt. Die relative Schräglage des Laserstrahls am Ende jedes linearen Abtragsvorgangs ermöglicht die Herstellung von zur Werkstückoberfläche senkrechten und auch hinterschnittenen Seitenwänden der Ausnehmung und den Erhalt einer nahezu ebenen und glatten Bodenfläche des Hohlraums mit ausgeprägten scharfen Ecken am Übergang zu den Seitenwänden. Wenn nämlich der Laserstrahl am Ende eines linienförmigen Abtragsvorganges senkrecht auf die Werkstückoberfläche auftrifft, erfolgt eine unvollständige Materialabtragung in diesem Bereich durch Phänomene der Teilreflexion bzw. -absorption, was bei wiederholter Durchführung der Abtragsvorgänge zur Herstellung tieferer Ausnehmungen zu einem nach innen geneigten Verlauf der Seitenwände führt. Diese Erscheinungen werden durch die relative Neigung des auftreffenden Laserstrahls zur Werkstückoberfläche am Ende jedes linienförmigen Abtragsvorganges vermieden. Darüber hinaus wird durch die erfindungsgemäße Kombination von Schwenk- und Linear-Bewegungen eine gleichmäßige Relativgeschwindigkeit des Laserstrahls gegenüber dem Werkstück erzielt, welche eine gleichbleibende Absorption des Laserstrahls und damit die Bildung einer ebenen Bodenfläche gewährleistet. Unterstützt werden diese Effekte noch durch eine entsprechende Leistungs-Steuerung der Laseranlage in Abhängigkeit von der Vorschubgeschwindigkeit des Brennflecks, beispielsweise durch eine Verringerung der Laserleistung im Bereich der jeweiligen Seitenwand der Ausnehmung, d. h. gegen Ende jedes linienförmigen Abtragsvorganges, um die in diesem Bereich zwangsläufig auftretende Vergrößerung der Verweildauer des Brennflecks zu kompensieren.

Da der Laserstrahl aus einer mit mindestens einem Druckfluid versorgten Düse austritt, trifft das Druckfluid am Ende jedes Bearbeitungsvorganges mit etwa der gleichen Neigung wie der Laserstrahl auf das Werkstück auf, was eine verstärkte Ausblaswirkung für die gasförmigen und flüssigen Materialpartikel gerade in den kritischen Eckbereichen bewirkt. Dieser Effekt wird noch verstärkt durch eine gezielte schräge Zuführung des Fluids auf den Brennfleck, wobei dieses Fluid ein Druckgas, wie Luft, Sauerstoff oder ein Inertgas und/oder auch eine geeignete Flüssigkeit, Suspension oder Dispersion, sein kann.

Bei dem ersten Lösungsvorschlag wird der horizontale Laserstrahl an einem Reflektor in die Vertikale umgelenkt und der auf das Werkstück auftreffende Strahlabschnitt wird durch Verdrehung des Reflektors verschwenkt. Diese Vorgehensweise eröffnet die Möglichkeit, taschen- oder ringförmige Ausnehmungen in Vollzylinder einzuarbeiten und bei Fortführung dieser Bearbeitungsvorgänge bis zur horizontalen Drehachse der Vollzylinder diese mit einer glatten Stirnwand abzustechen. Diese Vorgänge sind praktisch bei hochfesten Spezialwerkstoffen, wie Keramik, Titan oder Kompound-Materialien, von besonderer Bedeutung, die sich spanend nicht oder nur äußerst schwierig bearbeiten lassen.

Eine höhere Energieausbeute bietet die dritte Verfahrensvariante, bei welcher keine leistungsmindernde Umlenkung des Laserstrahls an einem Reflektor erfolgt, sondern der Laserstrahl horizontal auf das Werkstück auftrifft, wobei dieses auf einer Bahn bewegt wird, die sich aus kreisbogenförmigen und linearen Bewegungskomponenten zusammensetzt.

Um bearbeitungsbedingte Unregelmäßigkeiten an den Seitenwänden und auf dem Boden der jeweils hergestellten Ausnehmung auszugleichen, wird gemäß einer vorteilhaften Ausgestaltung der Erfindung das Werkstück um 90° um seine Hochachse verdreht, bevor der schichtweise Abtragsvorgang wiederholt wird. Die Anzahl an Wiederholungen des schichtweisen Abtragsvorgangs bestimmt die Tiefe der Ausnehmung und die Oberflächenrauhigkeiten bzw. die Glätte des Bodens, wobei durch die Steuerung weiterer Betriebsparameter, die Laserleistung, die Geschwindigkeit der Schwenkbewegung, die Tastfrequenz u. dgl., die Ebenheit und Glätte der Bodenfläche weiter vorteilhaft beeinflußt werden kann.

Von besonderer Bedeutung für den Verlauf der Seitenwände der hergestellten Ausnehmung ist ferner eine zweckmäßige Ausgestaltung der erfindungsgemäßen Vorgehensweise, bei welcher der Neigungswinkel zwischen der Werkstückoberfläche und dem Laserstrahl am Ende jedes linearen Bearbeitungsvorganges mit zunehmender Tiefe der Ausnehmung, d. h. der schichtweisen Abtragsvorgänge, vergrößert wird, wobei dieser Neigungswinkel zwischen dem Laserstrahl und der Werkstückoberfläche zu Beginn des ersten Abtragsvorganges 90° betragen kann und erst bei den weiteren schichtweisen Abtragsvorgängen in der gewünschten Weise eingestellt wird.

Gegenstand der Erfindung ist ferner eine Werkzeugmaschine zur Herstellung von Hohlräumen in einem massiven Werkstück mittels eines Laserstrahls, bestehend aus einem motorisch in einer Koordinatenebene bewegbaren Werkstücktisch, aus einer Laseranlage mit Fokussier- und Leitelementen für den Laserstrahl und aus einer Programmsteuerung für die Laseranlage und für die Vorschubmotoren des Werkstücktisches, wobei ein motorisch verschiebbarer und um die Achse des Laserstrahls verdrehbarer Schwenkkopf einen integrierten Reflektor aufweist, welcher den Laserstrahl um 90° in die vertikale Ebene umlenkt. Erfindungsgemäß ist der in einer Aufnahmewanne verschwenkbar gelagerte Werkstücktisch über eine Horizontalführung an einer Konsole horizontal verschiebbar montiert und die Konsole ist an Vertikalführungen des Ständers vertikal verschiebbar geführt. Der an einem horizontal am Maschinenständer verfahrbaren Gehäuse montierte Schwenkkopf weist eine Düse für den austretenden Laserstrahl und einen diesen umgebenden Fluidstrom auf.

Eine andere erfindungsgemäße Werkzeugmaschine zur Herstellung von taschen- bzw. kammerförmigen Hohlräumen in einem massiven Werkstück mittels eines Laserstrahls enthält ebenfalls einen in einer Koordinatenebene motorisch hin- und herbewegbaren Werkstücktisch, eine Laseranlage mit Fokussier- und Leitelementen für den Laserstrahl und eine Programmsteuerung für die Laseranlage und für die Vorschubmotoren des Werkstücktisches. Auf einem Maschinenständer ist eine horizontale rohrförmige Laserstrahlführung in Längsrichtung verfahrbar montiert, die an ihrem freien Ende die Fokussierelemente und eine Düse für den horizontal austretenden Laserstrahl und einen diesen umgebenden Fluidstrom trägt. Der Werkstücktisch ist über Konsolen in der Vertikalebene verfahrbar montiert und weist einen um eine Vertikalachse verdrehbaren winkelförmigen Werkstückträger mit gegenüber der Vertikalachse beabstandeter vertikaler Werkstück-Spannplatte auf.

Weitere Ausgestaltungen und Besonderheiten sind Gegenstand der Unteransprüche.

Einer der wesentlichen Vorzüge der Erfindung liegt darin, daß Werkstücke aus unterschiedlichsten Materialien mit hoher Abtragsleistung auf der gleichen Maschine ohne größere Umrüstzeiten bearbeitet werden können, was bisher mit keiner anderen Abtragsmethode möglich war. So können Werkstücke aus Keramik, Glas, Edelstahl, Titan und Speziallegierungen ebenso bearbeitet werden, wie Verbundwerkstoffe, z. B. faserverstärkte Materialien, Sinterkörper und geschichtet aufgebaute Formkörper. Gegenüber herkömmlichen spanenden Bearbeitungsvorgängen treten bei der erfindungsgemäßen Materialabtragung mittels Laserstrahls keine abtragsbedingten Kräfte auf, die bei der spanenden Bearbeitung regelmäßig Ursache für Schwingungen und Vibrationen (Rattern) sind. Darüber hinaus können auch dünnwandige Stege von wenigen Zehnteln Millimeter Wandstärke mit senkrechten oder hinterschnittenen Seitenflanken durch beidseitige Abtragsvorgänge aus dem Vollen hergestellt werden. Schließlich ist auch das Einarbeiten von schmalen tiefen Nuten unter z. B. 1 mm Breite in komplizierte Werkstücke, wie z. B. Turbinenschaufeln aus Keramik oder Titan, möglich, die bisher nur in langwierigen und aufwendigen Erosionsvorgängen hergestellt werden konnten.

Weitere Vorzüge und Besonderheiten der Erfindung sind bei den in der Zeichnung dargestellten Ausführungsbeispielen verwirklicht, die im folgenden ausführlicher beschrieben werden. Es zeigen:
- Fig. 1: schematisch das Funktionsprinzip eines ersten Abtragsverfahrens;
- Fig. 2: die Anwendung des in Fig. 1 dargestellten Funktionsprinzips bei der Bearbeitung eines zylindrischen Werkstücks;
- Fig. 3: schematisch das Funktionsprinzip eines anderen Abtragsverfahrens;
- Fig. 4A, 4B: schematisch das Funktionsprinzip eines weiteren Abtragsverfahrens;
- Fig. 5: eine Bearbeitungsvorrichtung gemäß der Erfindung mit integrierter Laserstrahlanlage in perspektivischer Darstellung;
- Fig. 6: eine Bearbeitungsvorrichtung mit einer gesonderten Laseranlage;
- Fig. 7: eine Bearbeitungsvorrichtung mit einer horizontalen Laseranlage;
- Fig. 8, 9: zwei Ausführungen der am Laserkopf angeordneten Düsen.

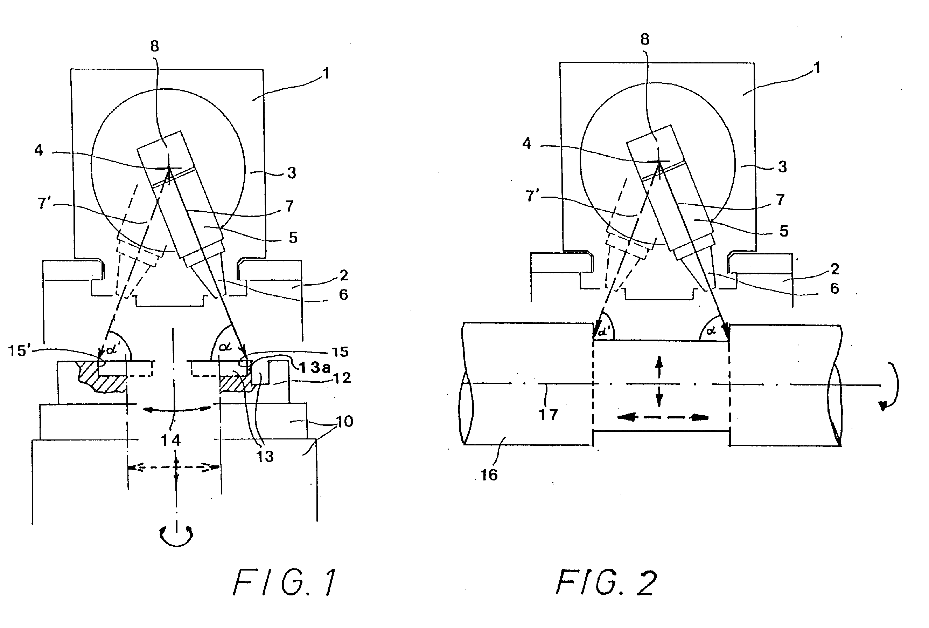

In Fig. 1 ist in Stirnansicht ein kastenförmiges Gehäuse 1 dargestellt, das auf der ebenen Oberfläche eines Maschinenständers 2 in Richtung senkrecht zur Zeichenebene verfahrbar ist und an seiner Stirnseite einen Schwenkkopf 3 trägt. Die horizontalen Längsbewegungen des kastenförmigen Gehäuses 1 und die Schwenkbewegungen des Schwenkkopfes 3 um die Achse 4 erfolgen mittels nicht dargestellter Elektromotoren, die von einer Programmsteuerung angesteuert werden. Am Schwenkkopf 3 ist ein Führungsrohr 5 befestigt, das an seinem unteren Ende eine Mehrkanal-Düse 6 trägt. Ein durch Pfeile angedeuteter Laserstrahl 7, 7' verläuft im kastenförmigen Gehäuse 1 horizontal in der Schwenkachse 4 und wird durch einen am oberen Ende des Führungsrohrs 5 schräg (45°) angeordneten Spiegel 8 in eine Vertikalebene umgelenkt.

Auf einem Werkstücktisch 10 ist ein massives Werkstück 12 aufgespannt, in das zwei kammerförmige Ausnehmungen 13 eingearbeitet werden, die einen dünnwandigen Zwischensteg 13a begrenzen. Der Werkstücktisch 10 führt hin- und hergehende Vorschubbewegungen auf einer durch den Pfeil 14 angedeuteten kreisbogenförmigen Bahn aus, die mit den Schwenkbewegungen des Schwenkkopfes 3 und damit des Laserstrahls 7 synchronisiert sind. Diese Bewegungsbahn des Werkstückes 12 setzt sich aus horizontalen und vertikalen Komponenten zusammen, welche der Werkstücktisch durch kombinierte Horizontal- und Vertikalbewegungen ausführt. Am Ende einer linienförmigen Abtragsperiode steht der Schwenkkopf 3 mit dem daran befestigten Führungsrohr 5 in der in durchgezogenen Linien dargestellten Position, so daß der Laserstrahl 7 unter einem vorgegebenen Neigungswinkel α auf die Oberfläche des zu bearbeitenden Werkstücks 12 bzw. auf die vertikale oder hinterschnittene Seitenwand 15 der bereits teilweise hergestellten Ausnehmung 13 auftrifft. In diesem Zustand befindet sich der Werkstücktisch mit dem aufgespannten Werkstück 12 in seiner oberen rechten Endlage. Ausgehend von diesem Endzustand wird der Schwenkkopf 3 und damit auch der Laserstrahl 7 sowie gleichzeitig der Werkstücktisch 10 mit dem aufgespannten Werkstück 12 nach links bewegt, wobei in der Mittelposition der Werkstücktisch 10 entsprechend seiner kreisbogenförmigen Bewegungsbahn abgesenkt und in der linken Endstellung wieder um einen entsprechenden Betrag angehoben ist. Die Geschwindigkeiten der Schwenkbewegung des Laserstrahls 7 und der Vorschubbewegung des Werkstücktisches 10 sind so aufeinander abgestimmt, daß sich der Brennfleck des Laserstrahls mit der von verschiedenen Parametern, z. B. dem Werkstückmaterial, abhängigen optimalen Relativgeschwindigkeit bewegt. In der in Fig. 1 linken Endstellung trifft der ebenfalls nach links verschwenkte Laserstrahl 7' unter dem gleichen Neigungswinkel α' auf die Werkstückoberfläche bzw. die Seitenwand 15' der Ausnehmung 13 auf. Falls der Verlauf der Seitenwände 15 und 15' unterschiedlich ist (eine Wand 15 vertikal und die andere Wand 15' hinterschnitten), sind auch die Neigungswinkel α und α' verschieden.

Durch diese Vorgehensweise wird erreicht, daß auch bei wiederholtem schichtweisem Abtragen des Materials in Form von mäanderförmig dicht nebeneinanderliegenden Linien vertikale Seitenwände entstehen und Ablagerungen insbesondere am Fuß der Seitenwände vermieden werden. Durch eine entsprechende Wahl des Schwenkwinkels α, α' des Laserstrahls 7 können auch hinterschnittene Seitenwände hergestellt werden, wie dies bei Gesenkformen häufig gewünscht wird. Um nicht nur - wie in Fig. 1 gezeigt - die Stirnwände 15, 15' sondern auch die beiden Längswände der Ausnehmung 13 vertikal bzw. hinterschnitten ausführen zu können, wird der Werkstücktisch 10 nach jedem linienförmigen Abtragen einer Materialschicht um seine Hochachse um 90° gedreht, so daß dann die Längswände der Ausnehmung quer zur Vorschubbewegung verlaufen. Gleichzeitig kann das Werkstück um die Dicke der bereits abgetragenen Schicht vertikal zugestellt werden, damit die Fokussierung des Laserstrahls und damit die Größe des Brennflecks erhalten bleibt. Beim Abtragen der letzten Materialschicht ist es zur Erzielung eines glatten ebenen Bodens zweckmäßig, eine Defokussierung des Laserstrahls gezielt vorzunehmen, um durch die weniger scharfe Bündelung einen Glättungseffekt auf der Bodenfläche zu erzielen. Eine ähnliche Wirkung kann durch Verminderung der Laserleistung erreicht werden.

Bei der in Fig. 2 dargestellten Verfahrensvariante ist ein vollzylindrisches Werkstück 16 stirnseitig z. B. in der bei Drehmaschinen üblichen Weise eingespannt und wird um seine Längsachse 17 taktweise verdreht, wobei die Drehwinkel derart gewählt sind, daß die linienförmigen Abtragsbahnen des hin- und hergeschwenkten Laserstrahls 7, 7' dicht nebeneinanderliegen. Wenn beispielsweise Längs- oder Ringnuten mit gleichbleibender Tiefe in den Zylinderkörper 16 eingearbeitet werden sollen, wird dieser in Richtung der gestrichelten Pfeile horizontal und auch vertikal bewegt, so daß sich eine der Fig. 1 entsprechende kreisbogenförmige Bahn ergibt und dadurch der Brennfleck während der Schwenkbewegung des Laserstrahls auf gleichem Niveau gehalten wird. Wenn jedoch der Zylinderkörper abgestochen (quer durchgetrennt) werden soll, wie dies in Fig. 2 gestrichelt dargestellt ist, dann kann auch ohne horizontale bzw. vertikale Bewegung des Werkstücks gearbeitet werden. Darüber hinaus ist auch eine mit einem herkömmlichen spanenden Drehvorgang vergleichbare Bearbeitungsweise möglich, bei welcher das Werkstück 16 kontinuierlich rotiert und der Laserstrahl 7, 7' eine fest eingestellte Neigung beibehält, um eine radiale Schulterfläche am Werkstück auszubilden.

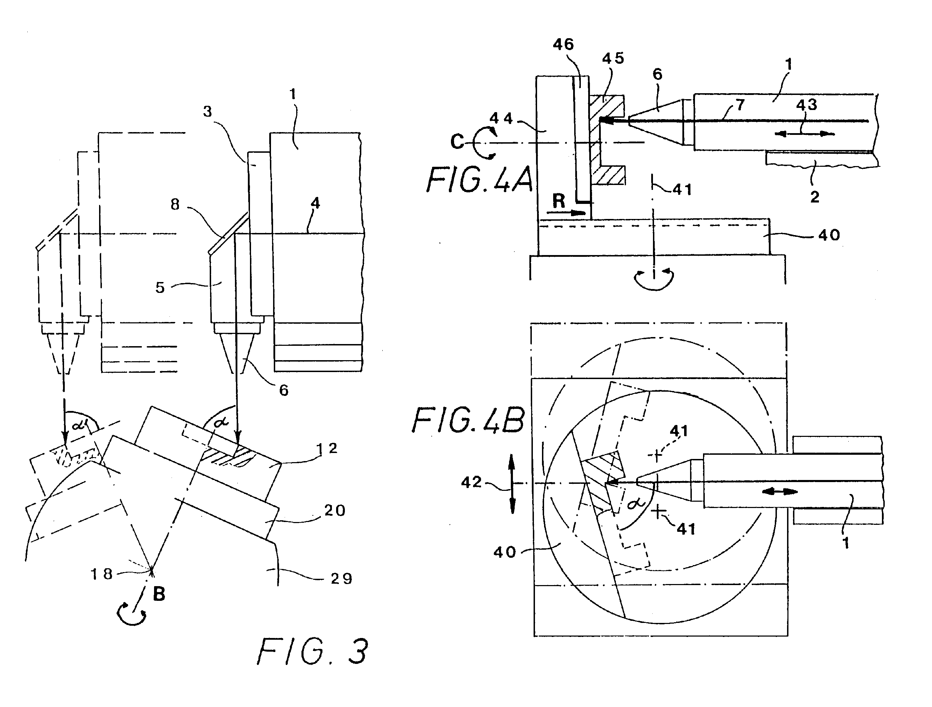

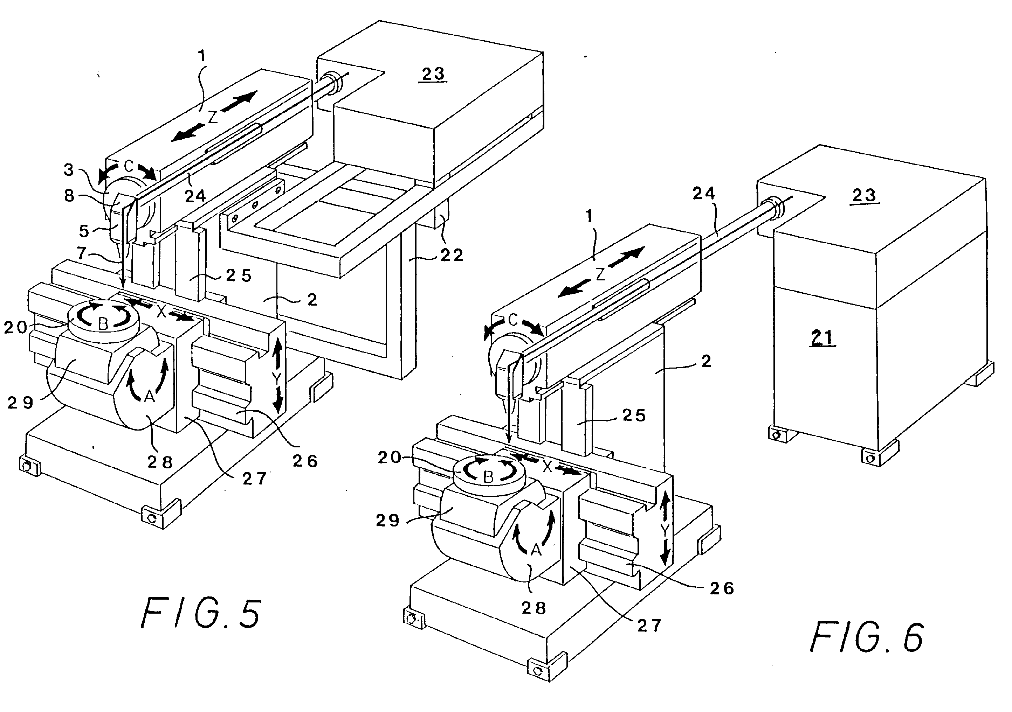

Die Verfahrensvariante nach Fig. 3 unterscheidet sich von dem Vorgehen nach Fig. 1 nur durch die Verwendung eines um eine horizontale Achse 18 motorisch schwenkbaren und in Richtung dieser Achse 18 verschiebbaren Drehtisches 20, der - ebenso wie der Werkstücktisch 10 gemäß Fig. 1 - an einer vertikal verfahrbaren Konsole (vgl. Fig. 5 und 6) montiert und um seine Mittelachse B verdrehbar ist. Durch eine Vorschubbewegung des Gehäusekastens 1 mit dem stirnseitig daran montierten Schwenkkopf 3 in die gestrichelt dargestellte vordere Stellung und eine mit dieser synchronisierten Schwenk- bzw. Kippbewegung des Werkstücktisches 20 um die Achse 18 kann bei dieser Ausführung eine schräge Relativlage zwischen dem Werkstück 12 und dem Laserstrahl 7 erzielt werden. Bei dieser Variante ist somit eine Verschwenkbewegung des Kopfes 3 um die Achse 4 nicht unbedingt erforderlich, wodurch sich die Konstruktion der Maschine vereinfacht.

Bei der Verfahrensvariante nach den Fig. 4A und 4B ist der Werkstücktisch 40 um die Hochachse 41 verdrehbar und in Richtung des Pfeiles 42 horizontal hin- und herbewegbar. Ein kastenförmiges Gehäuse 1 weist an seinem vorderen Ende eine Düse 6 auf, durch welche der Laserstrahl 7 ohne Umlenkung hindurchtritt. Das Gehäuse 1 ist auf einem Maschinenständer 2 in Richtung des Pfeiles 43 hin- und herverschiebbar geführt. Auf dem Werkstücktisch 40 ist ein Werkstückträger 44 hochkant montiert, auf dessen um die Mittelachse C verdrehbarer vertikaler Spannplatte 46 ein Werkstück 45 befestigt ist. Der Funktionsablauf eines linearen Abtragsvorganges ist in Fig. 4B in Draufsicht dargestellt. Bei jedem linienförmigen Abtragsvorgang wird der Werkstücktisch um die Hochachse 41 aus der durchgezogen dargestellten unteren Lage in die strichpunktiert dargestellte obere Lage bewegt, wobei mit der Schwenkbewegung um die Hochachse 41 eine horizontale Vorschubbewegung in Richtung des Pfeiles 42 gekoppelt ist. Zum Ausgleich der sich wegen der kreisbogenförmigen Bewegungsbahn ändernden Abstände zwischen dem Grund der Ausnehmung 13 im Werkstück und dem Vorderende der Düse 6 führt der Gehäusekasten 1 mit den darin integrierten Fokussier- und Leitelementen kurzhubige synchrone Bewegungen in Richtung des Pfeiles 43 aus. Darüber hinaus erfolgt auch die Zustellbewegung nach Beendigung eines schichtförmigen Abtragsvorganges durch eine Linearbewegung des Gehäusekastens 1 in Richtung des Pfeiles 43.

Fig. 5 zeigt eine Werkzeugmaschine zum Laserfräsen von kammerartigen Hohlräumen in Werkstücken, bei welcher eine bekannte CO₂-Laserstrahl-Anlage 23 über eine geeignete Tragkonstruktion 24 am Maschinenständer 2 montiert ist. Ein im Gehäusekasten 1 zentral angeordnetes Teleskoprohr 24 dient der Führung des horizontalen Laserstrahls 7. Der an der Stirnseite des Gehäusekastens 1 montierte Schwenkkopf 3 ist in Richtung des Doppelpfeils C zusammen mit dem hier kastenförmig ausgeführten Düsenhalter 5 verschwenkbar. An stirnseitigen Vertikalführungen 25 des Ständers 2 ist eine Konsole in Richtung des Doppelpfeiles Y vertikal verfahrbar, die an ihrer Stirnseite Horizontalführungen 26 zur in Richtung des Doppelpfeiles X verfahrbaren Halterung eines Schlittens 27 aufweist. An der Stirnseite dieses Schlittens 27 ist eine Aufnahmewanne 28 befestigt, in der ein Tischträger 29 in Richtung des Doppelpfeils A verdrehbar aufgenommen ist. Der Werkstücktisch 10 ist auf der Oberseite dieses Trägers 29 um seine Hochachse in Richtung des Doppelpfeils B verdrehbar angeordnet. Die einzelnen Bewegungen der verschiedenen Bauteile werden durch nicht dargestellte Elektromotoren mit bekannten Übertragungsmitteln ausgeführt, deren Betrieb von einer herkömmlichen Programmsteuerung gesteuert wird.

Die in Fig. 6 dargestellte Bearbeitungsvorrichtung entspricht im wesentlichen der Ausführung nach Fig. 5 und unterscheidet sich von dieser nur durch die gesondert ausgeführte Laserstrahl-Anlage 23, die auf einem eigenen Traggestell 21 montiert ist.

Die beiden Maschinen gemäß Fig. 5 und 6 sind zur Durchführung der in den Fig. 1 bis 3 dargestellten Verfahrensvarianten konzipiert.

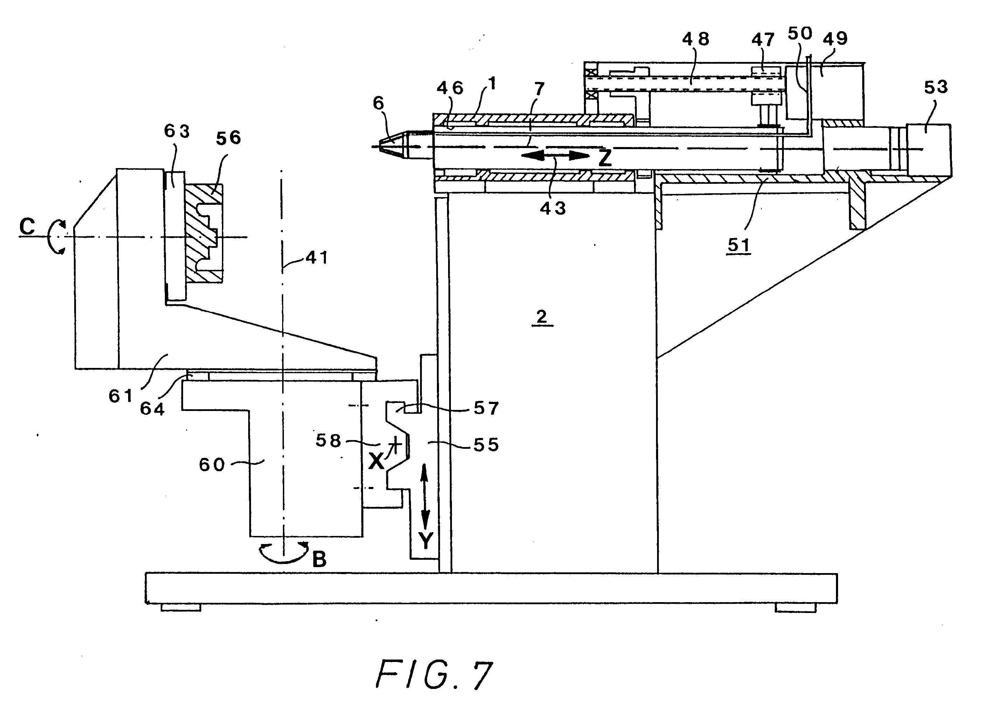

Die in Fig. 7 dargestellte Bearbeitungsmaschine ist zur Durchführung der Verfahrensvariante nach Fig. 4A und 4B ausgebildet und weist ein auf dem Maschinenständer 2 befestigtes kastenförmiges Gehäuse 1 auf, in dem ein Führungsrohr 46 für den Laserstrahl 7 in Richtung des Pfeiles 43 längsverschiebbar geführt ist. Am vorderen Ende des Führungsrohrs 46 ist eine Düse 6 befestigt und an seinem hinteren Ende greift die Mutter 47 einer Schraubspindel 48 an, welche von einem Motor 49 zur Ausführung der Linearbewegungen 43 angetrieben wird. Eine mit einem Druckfluid beaufschlagte Leitung 50 erstreckt sich im Führungsrohr 46 bis zur Düse 6. Auf einer an der Ständerrückseite befestigten Tragkonstruktion 51 ist die Laseranlage 53 montiert.

An der Vorderseite des Maschinenständers ist ein Schlitten 55 in Richtung des Doppelpfeils Y motorisch vertikal verschiebbar geführt, an dessen Außenseite Führungsschienen 57 zur horizontal verschiebbaren Halterung einer Tischkonsole 58 in der X-Achse ausgebildet sind. An dieser Konsole 58 ist das Unterteil 60 eines Drehtisches 61 befestigt, der als einteiliges abgewinkeltes Bauteil ausgebildet ist und dessen um die Mittelachse C verdrehbare vertikale Spannplatte 63 in etwa mit der Außenkante der Drehführung 64 fluchtet. Im Gegensatz zu der Tischausführung nach den Fig. 4A, 4B ist die vertikale Spannplatte 63 für das fertig bearbeitet dargestellte Werkstück 56 nicht auf dem Tischunterteil 60 bzw. der Drehführung 64 horizontal verstellbar. Wie aus Fig. 7 ersichtlich, können auch komplex geformte Ausnehmungen sowie massive Formkörper durch den linienförmigen schichtweisen Materialabtrag aus einem massiven Rohling hergestellt werden.

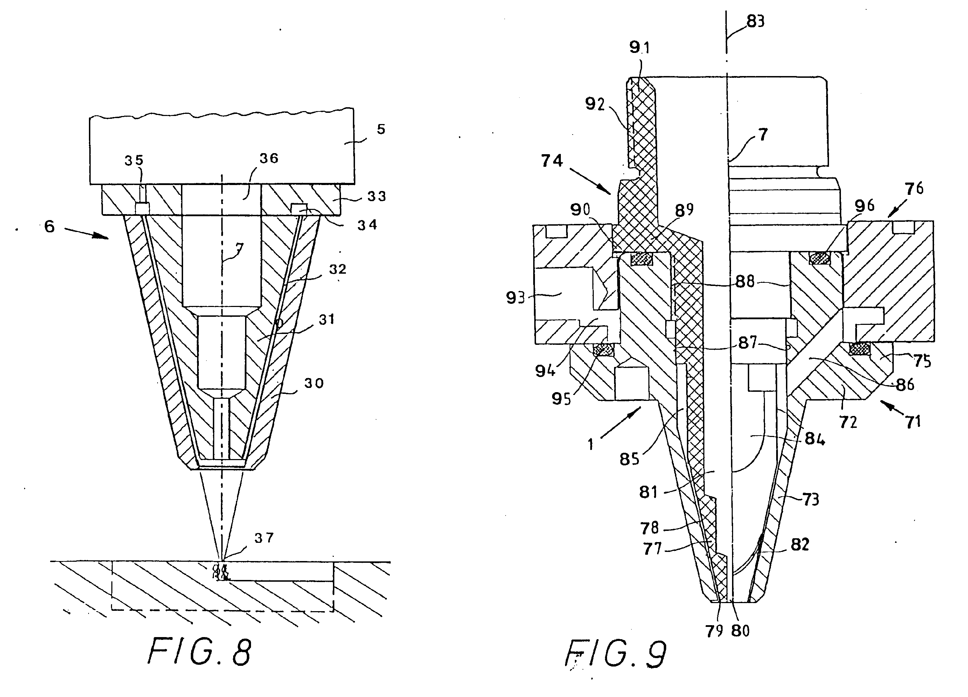

In den Fig. 8, 9 sind besonders zweckmäßige Strahldüsen 6 in zwei Varianten dargestellt, die bei kompaktem Aufbau und kleinen Querabmessungen eine gesonderte Zufuhr von unterschiedlichen Fluiden zum Brennfleck des Laserstrahls 7 ermöglichen. Die Düse nach Fig. 8 enthält einen kegelförmigen Außenmantel 30, in dessen Innenraum ein Kern 31 unter Ausbildung eines engen Kanals 32 angeordnet ist. Dieser Kanal 32 kann eine durchgehend konische Form haben oder es können eine Vielzahl von gleichartigen Einzelkanälen vorgesehen sein. An der ebenen Oberseite des Mantels 30 und des Kerns 31 ist ein Zwischenstück 33 befestigt, in welchem ein Ringkanal 34 ausgebildet ist, der mit der oberen Einströmöffnung des konischen Kanals 32 in Strömungsverbindung steht. Dieser Ringkanal 34 wird über einen Stutzen 35 mit einem Hochdruckgas, z. B. mit Druckluft von 3 bis 10 bar, beaufschlagt. Im Kern 31 ist eine zentrale mehrfach abgestufte Durchgangsbohrung 36 ausgebildet, welche den zentralen Laserstrahl 7 umgibt und der koaxialen Zufuhr eines Hilfsgases zum Auftreffpunkt bzw. Brennfleck 37 des Laserstrahls dient.

Die in Fig. 9 im einzelnen dargestellte Düsenausführung besitzt ein Gehäuse 71 mit einem verbreiterten Mittelteil 72 und einem konischen Mundstück 73, in dessen Innenraum eine etwa hohlzylindrische abgesetzte Einlage 74 achszentriert angeordnet ist. Diese Einlage 74 ist im linken Teil der Zeichnung im Axialschnitt und im rechten Teil in Seitenansicht dargestellt. Der mittlere verbreiterte Teil 72 des Gehäuses 71 enthält einen Radialflansch 75 als Auflage für einen Ring 76. Im konischen Mundstück 73 des Gehäuses 71 erstreckt sich der Endteil 77 der Einlage 74, dessen konische Außenwand mit der ebenfalls konischen Innenwand des Mundstücks 73 einen durchgehenden konischen Strömungskanal 78 begrenzen, der am Mundstückende in einer als Ringschlitz ausgebildeten Austrittsöffnung 79 ausmündet. Diese Austrittsöffnung 79 umgibt konzentrisch eine innere zentrale Austrittsöffnung 80 am Ende des sich durch die gesamte hülsenförmige Einlage 74 axial erstreckenden Strömungskanals 81 für ein Oxidationsgas, insbesondere für Sauerstoff, in dessen Längsachse der Laserstrahl 7 verläuft. Wie im rechten Teil der Einlage 74 gezeigt, kann in deren konischer Außenfläche mindestens eine Spiralnut 82 ausgebildet sein, um dem im Strömungskanal 78 strömenden Druckgas, vorzugsweise Druckluft, eine Rotationsbewegung um die Längsachse 83 zu erteilen.

Oberhalb des konischen Abschnitts 77 weist die Einlage 74 einen durch vier ebene achsparallele Flächen 84 gebildeten Vierkantabschnitt auf, der zusammen mit der Gehäuseinnenwand eine Verteilerkammer 85 begrenzt. Im mittleren verdickten Teil 72 des Gehäuses 71 sind vier gegeneinander winkelversetzte schräge Querbohrungen 86 ausgebildet, die jeweils gegenüberliegend zu je einer der ebenen Flächen 84 in die Verteilerkammer 85 ausmünden.

Der Vierkantabschnitt der Einlage 74 geht in einen zylindrischen Zentrierabschnitt 87 über, an den sich ein Gewindeabschnitt 88 anschließt. Mit diesen beiden Abschnitten 87, 88 ist die Einlage 74 im Innenraum des Gehäuses 71 achszentriert und in der Höhe feinfühlig verstellbar befestigt. An den Gewindeabschnitt 88 der Einlage 74 schließt sich über ein sich verbreiterndes Zwischenstück 89 mit einer Fixierschulter 90 für den Ringkörper 76 ein Anschlußstutzen 91 mit Außengewinde 92 an. Dieser formstabile Anschlußstutzen 91 sichert eine feste Verbindung des Düsenkopfes an den ggf. beweglichen Führungselementen des Laserstrahls und gleichzeitig an einer Sauerstoffzufuhr.

Wie in Fig. 9 dargestellt, weist der Ringkörper 76 eine radiale Gewindebohrung 93 auf, in die ein - nicht dargestellter - Anschlußnippel für die Druckluftzufuhr eingeschraubt werden kann. Diese Gewindebohrung 93 mündet in einen inneren Ringkanal 94, der mit den Querbohrungen 86 im Gehäuseteil 72 in Strömungsverbindung steht. In der oberen Stützfläche des Flansches 75 ist eine Ringnut zur Aufnahme eines O-Dichtungsringes 95 ausgebildet, der das Gehäuse gegenüber dem Ringkörper abdichtet. Ein weiterer O-Dichtungsring 96 befindet sich in einer Ringnut in der oberen Stirnfläche des Gehäuseteils 72 zur Abdichtung gegenüber dem Zwischenstück 89 der Einlage 74.

Bei der vorstehend beschriebenen Düse wird durch die gesonderte Zuführung von Sauerstoff im axialen Strömungskanal 81 und von Druckluft im konischen Strömungskanal 78 eine intensive Vermischung beider Gase nach ihrem Austritt aus den jeweiligen Öffnungen 79, 80 erzielt, wobei durch ein mehr oder weniger tiefes Einschrauben des Gewindeabschnitts 88 der Einlage 74 die Spaltweite und damit der Durchflußquerschnitt dieses konischen Strömungskanals feinfühlig eingestellt werden kann. Auf diese Weise läßt sich auch die Zusammensetzung des Gemisches und die kinetische Energie des Druckluftstrahls den jeweiligen Betriebsbedingungen, insbesondere den Eigenschaften der verschiedenen Werkstückmaterialien, anpassen.

Die Erfindung ist nicht auf die dargestellten bzw. vorstehend beschriebenen Verfahrens- und Vorrichtungs-Varianten beschränkt.

Die in Fig. 7 dargestellte Bearbeitungsmaschine hat gegenüber den Ausführungen nach den Fig. 5 und 6 den Vorteil einer vereinfachten und leichteren Konstruktion, wobei das Führungsrohr incl. seines Vorschubantriebs und auch der Düse kompakt ausgeführt werden kann, was die Zugänglichkeit zum Werkstück und auch die visuelle Überwachung der Bearbeitungsvorgänge verbessert. In diesem Sinne wirken auch die in das Führungsrohr integrierten Fluid-Zuführungen, die sich über die Gesamtlänge des Führungsrohrs in Form von einem oder mehreren Längskanälen erstrecken und mit äußeren Quellen in Strömungsverbindung stehen. Da das Werkstück 45 bei der Vorgehensweise nach Fig. 4A, 4B zusammen mit dem Träger 44, 46 horizontal in Richtung des Pfeils R auf dem Drehtisch 40 verstellbar montiert werden kann, ergeben sich kleinere horizontale Verfahrbewegungen des Werkstückes 45 in der Pfeilrichtung 42, um die durch die relative Schräglage des Laserstrahls 7 gegenüber dem Werkstück 45 verursachten Abstandsänderungen auszugleichen. Der Bearbeitungs- bzw. Brennpunkt kann nahe an die Hochachse 41 herangelegt werden, so daß dadurch relativ geringe Wegstrecken in Pfeilrichtung 42 zurückgelegt werden müssen, um den durch eine Verdrehung des Tisches hervorgerufenen "Längenversatz" auszugleichen. Dies ist ein wesentlicher Vorteil des horizontalen Laserstrahls, dessen auf das Werkstück auftreffender Abschnitt nicht synchron mit der Tischbewegung geschwenkt werden muß. Ein weiterer Vorteil der Maschine nach Fig. 7, d. h. der horizontalen Ausrichtung des Laserstrahls liegt in einem Sicherheitsaspekt gegen ein unbeabsichtigtes Austreten des hochenergetischen Laserstrahls in die Umgebung. Da die gattungsgemäßen Bearbeitungsmaschinen grundsätzlich mit Schutzkabinen ausgestattet sind, kann in der Kabinenwand, welche dem Laserstrahl gegenüberliegt, eine wärmeempfindliche Sicherheitsplatte angeordnet werden, die beim Auftreffen des hochenergetischen Laserstrahls aktiviert wird und die Maschine abschaltet. Dieser Sicherheitsaspekt ist gegenüber den Ausführungen nach den Fig. 5 und 6 von erheblicher Bedeutung, da bei letzteren entsprechende Sicherheits-Wandelemente in nahezu dem gesamten Innenbereich einer Schutzkabine angeordnet werden müßten. Schließlich ist die Ausführung nach Fig. 7 auch noch insofern vorteilhafter, weil sich eine wesentlich größere Leistungsausbeute als bei Ausführungen mit Reflektoren 8 erzielen läßt. So kann beispielsweise ein Laser von 750 W eingesetzt werden, der die gleiche Abtragsleistung erbringt, wie ein Laser mit 1500 W bei mehrfacher Umlenkung durch Reflexion.

Die erfindungsgemäßen Bearbeitungsvorgänge zur Herstellung von relativ tiefen Hohlräumen in sonst nur mit großen Schwierigkeiten zu bearbeitenden Werkstoffen können noch in verschiedener Weise weitergebildet werden. So ist es beispielsweise möglich, statt eines Druckgases eine Feststoff-Gas- oder eine Feststoff-Flüssigkeitsuspension unter relativ hohem Druck auf die Bearbeitungsstelle zu spritzen, um das schmelzflüssige Material durch die hochwärmefesten Feststoffpartikel in der Suspension nach Art des "Sandstrahlens" abzutragen und dadurch die Abtragsleistung zu steigern. Darüber hinaus können auch durch den Zusatz von geeigneten Chemikalien zu den Suspensionen und Flüssigkeiten oder Gasen vorbestimmte Legierungseffekte in den oberflächennahen Zonen der Hohlraumwände erzielt werden.

Um einen automatischen Ablauf verschiedener Bearbeitungsvorgänge an einem oder mehreren Werkstücken ausführen zu können, ist auch eine lösbare Kopplung der Düsen am Laserkopf möglich, um die Düsen mittels einer geeigneten Wechselvorrichtung auszutauschen und verschiedenartige Arbeiten, wie Laser-Schneiden, Laser-Schweißen, Laser-Fräsen usw., ausführen zu können.

Mit dem erfindungsgemäßen Verfahren lassen sich auch ballig oder sphärisch geformte Bauteile mit einer Vielzahl von dicht nebeneinanderliegender taschenförmiger Ausnehmungen aus Keramik, Titan od. dgl. herstellen, wie sie als Gelenk- oder Knochenersatz in der Medizin Verwendung finden. Durch die Ausbildung dieser Vielzahl von taschenförmigen relativ tiefen Hohlräumen mit hinterschnittenen Wänden ergibt sich die Möglichkeit, daß die Knochensubstanz in diese Hohlräume eines eingesetzten Implantats einwächst, wodurch sich eine sehr feste Verbindung zwischen dem Knochen und dem Implantat ergibt. Neben diesen speziellen Anwendungen ist das erfindungsgemäße Vorgehen auch zur abtragenden Bearbeitung von Quarzglas geeignet, insbesondere zur Herstellung von Großteleskopen, die aus einer Vielzahl von feinbearbeiteten Einzelsegmenten zusammengesetzt werden. Schließlich können auch dreidimensionale Formkörper durch schichtweisen Randabtrag des Materials aus massiven Rohlingen hergestellt werden, wobei dann zweckmäßig ein Nd-YAG-Laser ohne Druckfluid eingesetzt werden sollte.

Der relative Neigungswinkel zwischen dem Laserstrahl und dem Werkstück bzw. dessen Oberfläche sollte von Schicht zu Schicht vergrößert werden, wobei dieser Winkel bei der ersten Abtragsschicht sehr klein oder Null betragen kann und bei 50 abgetragenen Schichten auf 20° zur Vertikalen ansteigt. Die Vergrößerung dieses Winkels muß nicht stufenweise linear sein, sondern kann auch einer geraden oder gekrümmten Kurve folgen, Zur Erzielung optimaler Abtragsleistungen werden die Verfahrensparameter von Schicht zu Schicht geändert, um anfangs eine maximale Materialabtragung, danach eine Feinbearbeitung und schließlich eine Fein-Schicht-Wirkung zu erzielen. Wenn schließlich eckige Ausnehmungen hergestellt werden sollen, wird die gesamte Kontur am Ende des Bearbeitungsvorgangs nochmals abgefahren, um den am Taschengrund sich eventuell gebildeten bogenförmigen Übergang abzutragen und eine scharfe Ecke zwischen der Bodenfläche und den Seitenwänden zu erhalten.

## Patentansprüche

1. Verfahren zum Herstellen von Hohlräumen in massiven Werkstücken (12) mittels Laserstrahls (7), bei dem das Material durch hin- und hergehende Vorschubbewegungen in dicht nebeneinanderliegenden Führungsbahnen vom Laserstrahl (7) abgetragen wird,
**dadurch gekennzeichnet,**
daß der Laserstrahl (7) während jedes linienförmigen Abtragsvorgangs um einen vorgegebenen Winkel geschwenkt wird, so daß sich sein Bearbeitungspunkt auf einer kreisbogenförmigen Bahn bewegt und der Laserstrahl am Ende jedes linearen Abtragsvorganges eine relative Schräglage zum Werkstück einnimmt,
daß das Werkstück (12) während jeder Schwenkbewegung des Laserstrahls auf einem Kreisbogen um die Schwenkachse des Laserstrahls translatorisch derart hin- und herbewegt wird, daß die Lage des Bearbeitungspunktes im Werkstück auf gleichem Niveau bleibt und sich eine gleichmäßige Relativgeschwindigkeit des Werkstücks gegenüber dem Laserstrahl ergibt, und
daß nach dem Abtragen einer Materialschicht diese linienförmigen Abtragsvorgänge bis zum Erreichen der vorgegebenen Endtiefe des Hohlraums wiederholt werden.

2. Verfahren zum Herstellen von Hohlräumen in massiven Werkstücken (12) mittels Laserstrahls (7), bei dem das Material durch hin- und hergehende Vorschubbewegungen in dicht nebeneinanderliegenden Führungsbahnen vom Laserstrahl (7) abgetragen wird,
**dadurch gekennzeichnet,**
daß der Laserstrahl (7) während jedes linienförmigen Abtragsvorganges translatorisch hin- und herbewegt wird, so daß sich sein Bearbeitungspunkt auf einer geradlinigen Bahn bewegt,
daß das Werkstück (12) während jedes Abtragsvorganges eine Schwenkbewegung um eine zum Laserstrahl senkrechte Achse (18) und eine damit kombinierte Hubbewegung in einer zum Laserstrahl (7) parallelen Richtung ausführt, so daß die Lage des Bearbeitungspunktes im Werkstück (12) auf gleichbleibendem Niveau bleibt, der Laserstrahl am Ende jedes linearen Bearbeitungsvorganges eine relative Schräglage gegenüber dem Werkstück einnimmt und eine gleichmäßige Relativgeschwindigkeit zwischen dem Werkstück und dem Laserstrahl eingehalten wird, und
daß nach dem Abtragen einer Materialschicht diese linienförmigen Abtragsvorgänge bis zum Erreichen der vorgegebenen Endtiefe des Hohlraums wiederholt werden.

3. Verfahren nach Anspruch 1 oder 2,
dadurch gekennzeichnet,
daß der horizontale Laserstrahl durch einen schräggestellten Reflektor in die Vertikale umgelenkt und der auf das Werkstück auftreffende Strahlabschnitt durch Verdrehen des Reflektors verschwenkt wird.

4. Verfahren nach einem der Ansprüche 1 bis 3,
dadurch gekennzeichnet,
daß das Werkstück (12) um seine Längsachse verdreht wird.

5. Verfahren zum Herstellen von Hohlräumen in massiven Werkstücken (45) mittels Laserstrahls (7), bei dem das Material durch hin- und hergehende Vorschubbewegungen in dicht nebeneinanderliegenden Führungsbahnen vom Laserstrahl (7) abgetragen wird,
**dadurch gekennzeichnet,**
daß das Werkstück (45) während jedes linearen Abtragsvorganges um eine vertikale Achse (41) in einem vorgegebenen Winkel verschwenkt und gleichzeitig der Brennpunkt des fokussierten Laserstrahls (7) in der Strahlachse verschoben wird, so daß die Lage des Bearbeitungspunktes im Werkstück auf gleichbleibendem Niveau bleibt, der Laserstrahl am Ende jedes linearen Bearbeitungsvorganges eine relative Schräglage gegenüber dem Werkstück einnimmt und eine gleichmäßige Relativgeschwindigkeit des Laserstrahls gegenüber dem Werkstück eingehalten wird, und
daß nach dem Abtragen einer Materialschicht diese linienförmigen Abtragsvorgänge bis zum Erreichen der vorgegebenen Endtiefe des Hohlraums wiederholt werden.

6. Verfahren nach einem der Ansprüche 1 bis 5,
dadurch gekennzeichnet,
daß der Schwenkwinkel des Laserstrahls bzw. des Werkstücks mit jedem schichtförmigem Abtrag kontinuierlich oder um einen vorgegebenen Betrag vergrößert wird.

7. Verfahren nach einem der Ansprüche 1 bis 6,
dadurch gekennzeichnet,
daß das Werkstück nach jedem schichtweisen Abtragsvorgang um 90° gedreht wird.

8. Verfahren nach einem der Ansprüche 1 bis 7,
dadurch gekennzeichnet,
daß mindestens ein Druckfluidstrahl koaxial und/oder schräg zum Laserstrahl auf die Abtragsstelle geführt wird.

9. Verfahren nach einem der Ansprüche 1 bis 8,
dadurch gekennzeichnet,
daß die Leistung des Laserstrahls zur Bearbeitung der Bodenfläche des Hohlraums vermindert wird.

10. Verfahren nach einem der Ansprüche 1 bis 9,
dadurch gekennzeichnet,
daß der Laserstrahl zur Bearbeitung der Bodenfläche des Hohlraums gezielt defokussiert wird.

11. Werkzeugmaschine zur Herstellung von Hohlräumen in einem massiven Werkstück mittels eines Laserstrahls, bestehend aus einem motorisch in einer Koordinatenebene bewegbaren Werkstücktisch (10), aus einer Laseranlage (23) mit Fokussier- und Leitelementen für den Laserstrahl (7) und aus einer Programmsteuerung (21) für die Laseranlage und für die Vorschubmotoren des Werkstücktisches, wobei ein motorisch verschiebbarer und um die Achse des Laserstrahls (7) verdrehbarer Schwenkkopf einen integrierten Reflektor (8) aufweist, welcher den Laserstrahl um 90° in die vertikale Ebene umlenkt,
**dadurch gekennzeichnet,** daß
der in einer Aufnahmewanne (28) verschwenkbar gelagerte Werkstücktisch (20) über eine Horizontalführung (26) an einer Konsole (27) horizontal verschiebbar montiert und die Konsole an Vertikalführungen (25) des Ständers (2) vertikal verschiebbar geführt ist und
der Schwenkkopf (3) an einem horizontal am Maschinenständer (2) verfahrbaren Gehäuse (1) montiert ist und eine Düse (6) für den austretenden Laserstrahl (7) sowie einen diesen umgebenden Fluidstrom aufweist.

12. Werkzeugmaschine zur Herstellung von Hohlräumen in einem massiven Werkstück mittels eines Laserstrahls, bestehend aus einem motorisch in einer Koordinatenebene bewegbaren Werkstücktisch (40,60), aus einer Laseranlage (53) mit Fokussier- und Leitelementen für den Laserstrahl und aus einer Programmsteuerung für die Laseranlage und die Vorschubmotoren des Werkstücktisches,
**dadurch gekennzeichnet,**
daß auf einem Maschinenständer (2) eine horizontale rohrförmige Laserstrahlführung (46) in Längsrichtung (43) verfahrbar montiert ist, die an ihrem freien Ende die Fokussierelemente und eine Düse (6) für den horizontal austretenden Laserstrahl (7) und einen diesen umgebenden Fluidstrom trägt und
daß der Werkstücktisch (40; 60) über Konsolen (55, 58) am Maschinenständer (2) in der vertikalen Koordinatenebene verfahrbar montiert ist und einen um eine Vertikalachse (41) verdrehbaren winkelförmigen Werkstückträger (61) mit gegenüber der Vertikalachse (41) beabstandeter vertikaler Werkstück-Spannplatte (63) aufweist.

13. Werkzeugmaschine nach Anspruch 12,
dadurch gekennzeichnet,
daß der die vertikale Spannplatte (46) tragende Teil (44) des Werkstückträgers horizontal verstellbar auf dem Drehtisch (40) montiert ist.

14. Werkzeugmaschine nach einem der Ansprüche 11 bis 13,
dadurch gekennzeichnet,
daß die Laseranlage (23) über eine Tragkonstruktion (51) am Maschinenständer (2) montiert ist.

15. Werkzeugmaschine nach einem der Ansprüche 11 bis 14,
dadurch gekennzeichnet,
daß am Kopf (3) des Laserstrahl-Führungsgehäuses (1) eine hohlzylindrische Halterung (5) für die Düse (6) montiert ist, die zwischen einem kegelstumpfförmigen Mantel (30) und einem konischen Kern (31) verlaufende Fluidkanäle (32) sowie eine zentrale mehrfach abgestufte Durchgangsbohrung (36) für den Laserstrahl (7) und für ein zusätzliches Hilfsgas aufweist.

16. Werkzeugmaschine nach einem der Ansprüche 11 bis 15,
dadurch gekennzeichnet,
daß am Kopf (3) eine hohlzylindrische Halterung (5) für eine Düse montiert ist, deren hohlzylindrisches Gehäuse in einem hohlkegeligen Mundstück endet und Anschlüsse sowie innere Strömungskanäle zur gesonderten axialen und schrägen Zuführung von verschiedenen Fluiden auf den Einwirkbereich des Laserstrahls (7) auf dem Werkstück aufweist, wobei im Mundstück (73) des Gehäuses (71) ein Einsatz (74) angeordnet ist, dessen konische Außenwand mit der konischen Innenwand des Mundstücks (73) einen Strömungskanal (78) für ein Druckgas begrenzt und dessen Innenraum den sich zur Düsenöffnung (80) hin verengenden axialen Strömungskanal (81) für ein weiteres Druckfluid bildet, wobei die ringförmige Austrittsöffnung (79) des konischen Strömungskanals (78) die zentrale Austrittsöffnung (80) des axialen Strömungskanals (81) koaxial umgibt.

17. Werkzeugmaschine nach Anspruch 15,
dadurch gekennzeichnet,
daß der Einsatz (74) zur gezielten Änderung des Durchflußquerschnittes des konischen Strömungskanals (78) höhenverstellbar und achszentriert im Gehäuse (71) positioniert ist.

## Claims

1. A method of producing cavities in solid workpieces (12) by means of a laser beam (7), the material being eroded by reciprocating advancing movements of the laser beam (7) in closely adjacent guide tracks, characterised in that, during each linear erosion process, the laser beam (7) is pivoted through a preset angle so that its operating point moves on an arcuate track and, at the end of each linear erosion process, the laser beam occupies an inclined position relative to the workpiece; during each pivoting motion of the laser beam, the workpiece (12) is pivoted in translation in reciprocation in an arc around the pivoting axis of the laser beam, so that the position of the working point in the workpiece remains at the same level and the workpiece moves at a uniform speed relative to the laser beam and, after a layer of material has been eroded, the linear erosion processes are repeated until the preset final depth of the cavity is reached.

2. A method of producing cavities in solid workpieces (12) by means of a laser beam (7), the material being eroded by reciprocating advancing movements of the laser beam (7) in closely adjacent guide tracks, characterised in that, during each linear erosion process, the laser beam (7) is moved in translation in reciprocation, so that its working point moves along a straight track; during each removal process the workpiece (12) pivots around an axis (18) at right angles to the laser beam, combined with a stroke in a direction parallel to the laser beam (7), so that the position of the working point in the workpiece (12) remains at the same level, the laser beam occupies an inclined position relative to the workpiece at the end of each linear machining process, and the workpiece is kept at a uniform speed relative to the laser beam, and, after a layer of material has been eroded, the linear erosion processes are repeated intil the preset final depth of the cavity is reached.

3. A method according to claim 1 or 2, characterised in that the horizontal laser beam is deflected in the vertical direction by an inclined reflector and the portion of the beam striking the workpiece is pivoted by rotating the reflector.

4. A method according to any of claims 1 to 3, characterised in that the workpiece (12) is rotated around its longitudinal axis.

5. A method of producing cavities in solid workpieces (45) by means of a laser beam (7), the material being eroded by reciprocating advancing movements of the laser beam (7) in closely adjacent guide tracks, characterised in that, during each linear erosion process, the workpiece (45) is pivoted through a preset angle around a vertical axis (41) and simultaneously the focal point of the focused laser beam (7) is shifted along the axis of the beam, so that the position of the working point in the workpiece remains at the same level, at the end of each linear working process the laser beam occupies an inclined position relative to the workpiece, the laser beam is maintained at a uniform speed relative to the workpiece and, after erosion of a layer of material, the linear erosion processes are repeated until the cavity reaches the preset final depth.

6. A method according to any of claims 1 to 5, characterised in that the pivoting angle of the laser beam or workpiece is increased continuously or by a preset amount during the erosion of each layer.

7. A method according to any of claims 1 to 6, characterised in that after each layer has been eroded, the workpiece is rotated through 90°.

8. A method according to any of claims 1 to 7, characterised in that at least one jet of pressure fluid is guided on to the erosion place coaxially and/or at an angle to the laser beam.

9. A method according to any of claims 1 to 8, characterised in that the power of the laser beam is reduced in order to machine the bottom surface of the cavity.

10. A method according to any of claims 1 to 9, characterised in that the laser beam is deliberately defocused in order to machine the bottom surface of the cavity.

11. A machine tool for producing cavities in a solid workpiece by means of a laser beam, comprising a workpiece table (10) motor-drivable in a co-ordinate plane, a laser system (23) comprising elements for focusing and guiding the laser beam (7) and a program control (21) for the laser system and the motors for advancing the workpiece table, a motor-drivable swivel head, rotatable around the axis of the laser beam (7), having an incorporated reflector (8) which deflects the laser beam through 90° into the vertical plane, characterised in that the workpiece table (20), which is pivotably mounted in a trough (28), is mounted for horizontal movement on a bracket (27) via a horizontal guide (26) and the bracket is guided for vertical movement on vertical guides (25) on the stand (2), and the swivel head (3) is mounted on a casing (1) horizontally movable on the machine stand (2) and has a nozzle (6) for the emerging laser beam (7) and for a stream of fluid surrounding it.

12. A machine tool for producing cavities in a solid workpiece by means of a laser beam, comprising a workpiece table (40, 60) motor-drivable in a coordinate plane, a laser system (53) comprising elements for focusing and guiding the laser beam, and a program control for the laser system and the motors for advancing the workpiece table, characterised in that a horizontal tubular laser beam guide (46) is mounted for movement in the longitudinal direction (43) on a machine stand (2) and at its free end bears the focusing elements and a nozzle (6) for the horizontally emerging laser beam (7) and a stream of fluid surrounding it, and the workpiece table (40; 60) is mounted on brackets (55, 58) on the machine stand (2) so as to be movable in the vertical co-ordinate plane and comprises an angular workpiece carrier (61) rotatable around a vertical axis (41) and having a vertical plate (63) for clamping the workpiece at a distance from the vertical axis (41).

13. A machine tool according to claim 12, characterised in that the part (44) of the workpiece carrier bearing the vertical clamping plate (46) is mounted on the rotary table (40) so as to be horizontally movable.

14. A machine tool according to any of claims 11 to 13, characterised in that the laser system (23) is mounted on the machine stand (2) via a support structure (51).

15. A machine tool according to any of claims 11 to 14, characterised in that a hollow cylindrical holder (5) for the nozzle (6) is mounted on the head (3) of the casing (1) for guiding the laser beam, and has fluid ducts (32) extending between a frusto-conical jacket (30) and a conical core (31) and also has a central multiple-step through bore (36) for the laser beam (7) and for an additional auxiliary gas.

16. A machine tool according to any of claims 11 to 15, characterised in that a hollow cylindrical holder (5) for a nozzle is mounted on the head (3) and has a hollow cylindrical casing ending in a hollow conical mouthpiece and also has connections and internal flow ducts for separate axial and angular supply of various fluids to the workpiece in the region of action of the laser beam (7), an insert (74) being disposed in the mouthpiece (73) of the casing (71) and having a conical outer wall which co-operates with the conical inner wall of the mouthpiece (73) to define a flow duct (78) for a pressure gas, the interior of the insert forming an axial flow duct (81), narrowing towards the nozzle opening (80), for an additional pressure fluid, and the annular outlet opening (79) of the conical flow duct (78) coaxially surrounds the central outlet opening (80) of the axial flow duct (81).

17. A machine tool according to claim 15, characterised in that the insert (74) is positioned in the casing (71) so as to be vertically adjustable and so that its axis is centred, for controllably altering the flow cross-section of the conical flow duct (78).

## Revendications

1. Procédé de réalisation de cavités dans des pièces massives (12) au moyen d'un rayon laser (7), procédé dans lequel la matière est enlevée par le rayon laser (7) par des mouvements de va-et-vient sur des trajectoires de guidage étroitement rapprochées,
caractérisé
par le fait que pendant chaque processus d'enlèvement linéaire le rayon laser (7) est soumis à un pivotement d'un angle prédéterminé, de sorte que son point de travail se déplace sur une trajectoire en forme d'arc de cercle et qu'à la fin de chaque processus d'enlèvement linéaire, la rayon laser occupe une position oblique relativement à la pièce,
par le fait que, pendant chaque mouvement de pivotement du rayon laser sur un arc de cercle autour de l'axe de pivotement du rayon laser, la pièce (12) est déplacée en va-et-vient en translation de manière telle que la position du point de travail dans la pièce reste au même niveau et qu'il y ait une vitesse relative uniforme de la pièce par rapport au rayon laser; et
par le fait qu'après l'enlèvement d'une couche de matière, ces processus d'enlèvement en forme de ligne sont répétés jusqu'à ce que l'on obtienne la profondeur finale, donnée à l'avance, de la cavité.

2. Procédé de réalisation de cavités dans des pièces massives (12) au moyen d'un rayon laser (7), procédé dans lequel la matière est enlevée par le rayon laser (7) par des mouvements de va-et-vient sur la direction d'avance, sur des trajectoires de guidage étroitement proches l'une de l'autre,
caractérisé
par le fait qu'au cours de chaque processus d'enlèvement en forme de ligne, le rayon laser (7) est déplacé en va-et-vient de translation, de sorte que son point de travail se déplace sur une trajectoire rectiligne; par le fait que, pendant chaque processus d'enlèvement, la pièce (12) exécute un mouvement de pivotement autour d'un axe (12) perpendiculaire au rayon laser et, combiné avec ce mouvement, une course sur une direction parallèle au rayon laser (7), de sorte que la position du point de travail dans la pièce (12) reste au même niveau, le rayon laser occupant à la fin de chaque processus d'usinage linéaire une position oblique relativement à la pièce, et une vitesse relative uniforme étant maintenue entre la pièce et le rayon laser; et par le fait qu'après l'enlèvement d'une couche de matière, ces processus d'enlèvement en forme de ligne sont répétés jusqu'à ce que soit atteinte la profondeur finale, donnée à l'avance, de la cavité.

3. Procédé selon revendication 1 ou 2,
caractérisé
par le fait que le rayon laser horizontal est dévié dans la verticale par un réflecteur disposé obliquement et la partie de rayon arrivant sur la pièce est déplacée par pivotement par déplacement angulaire du réflecteur.

4. Procédé selon l'une des revendications 1 à 3,
caractérisé
par le fait que la pièce (12) est déplacée angulairement autour de son axe longitudinal.

5. Procédé de réalisation de cavités dans des pièces massives (45) au moyen d'un rayon laser (7), procédé dans lequel la matière est enlevée par le rayon laser (7) au moyen de mouvements de va-et-vient sur des trajectoires de guidage étroitement rapprochées,
caractérisé
par le fait qu'au cours de chaque processus d'enlèvement linéaire, la pièce (45) est déplacée par pivotement autour d'un axe vertical (41), cela d'un angle prédéterminé, et le point focal du rayon laser focalisé (7) est déplacé sur l'axe du rayon de manière que la position du point de travail dans la pièce reste au même niveau, le rayon laser occupant, à la fin de chaque processus d'usinage linéaire, une position oblique relativement à la pièce, et une vitesse relative uniforme du rayon laser par rapport à la pièce étant maintenue; et
par le fait qu'après l'enlèvement d'une couche de matière, ces processus d'enlèvement en forme de ligne sont répétés jusqu'à l'obtention de la profondeur finale prédéterminée de la cavité.

6. Procédé selon l'une des revendications 1 à 5,
caractérisé
par le fait que l'angle de pivotement du rayon laser ou, selon le cas, de la pièce, est augmenté de manière continue, ou d'une quantité prédéterminée, avec chaque enlèvement en forme de couche.

7. Procédé selon l'une des revendications 1 à 6,
caractérisé
par le fait que la pièce est tournée de 90° après chaque processus d'enlèvement par couche.

8. Procédé selon l'une des revendications 1 à 7,
caractérisé
par le fait qu'au moins un jet de fluide sous pression est dirigé sur le point d'enlèvement, cela coaxialement et/ou obliquement au rayon laser.

9. Procédé selon l'une des revendications 1 à 8,
caractérisé
par le fait que la puissance du rayon laser est réduite pour l'usinage de la surface du fond de la cavité.

10. Procédé selon l'une des revendications 1 à 9,
caractérisé
par le fait que, pour l'usinage de la surface du fond de la cavité, le rayon laser est défocalisé d'une manière appropriée.

11. Machine-outil pour réaliser des cavités dans une pièce massive au moyen d'un rayon laser, constituée par une table porte-pièce (10) déplaçable dans un plan de coordonnées au moyen d'un système motorisé, par une installation laser (23) avec éléments de focalisation et de guidage du rayon laser (7) et par une commande programmée (21) pour commander l'installation laser et pour commander les moteurs de déplacement de la table porte-pièce, une tête pivotante déplaçable en translation par un entraînement motorisé et déplaçable en rotation autour de l'axe du rayon laser (7) présentant un réflecteur intégré (8) qui dévie le rayon laser de 90° dans le plan vertical,
caractérisée
par le fait que la table porte-pièce (20) montée pivotante dans une cuve réceptrice (28) est montée avec possibilité de translation horizontale sur une console (27), et la console est guidée en translation verticale sur des guides verticaux (25) du montant (2), et
la tête pivotante (3) est montée sur une enceinte (1) déplaçable horizontalement sur le montant (2) de la machine, et présente une buse (6) pour le rayon laser sortant (7) ainsi que pour un courant de fluide entourant celui-ci.

12. Machine-outil pour réaliser des cavités dans une pièce massive au moyen d'un rayon laser, constituée par une table porte-pièce (40, 60) déplaçable de manière motorisée dans un plan de coordonnées, par une installation laser (53) avec éléments de focalisation et de guidage du rayon laser et par une commande à programme pour l'installation laser et les moteurs de déplacement de la table porte-pièce,
caractérisée
par le fait qu'un guide ou passage tubulaire horizontal (46) pour le rayon laser est monté, avec possibilité de déplacement en direction longitudinale (43), sur un montant (2) de la machine, ce guide ou passage portant à son extrémité libre les éléments de focalisation ainsi qu'une buse (6) pour le rayon laser (7) sortant horizontalement et pour un courant de fluide entourant ce dernier; et
par le fait que la table porte-pièce (40; 60) est montée, par l'intermédiaire de consoles (55, 58), sur le montant (2) de la machine, de manière à pouvoir être déplacée dans le plan vertical des coordonnées, et présente un porte-pièce (61) en forme d'équerre pouvant tourner autour d'un axe vertical (41) et doté d'une plaque serre-pièce (63) qui est verticale et est écartée de l'axe vertical (41).

13. Machine-outil selon revendication 12,
caractérisée
par le fait que la partie (44) du porte-pièce portant la plaque de serrage verticale (46) est montée avec possibilité de déplacement horizontal sur la table tournante (40).

14. Machine-outil selon l'une des revendications 11 à 13,
caractérisée
par le fait que l'installation laser (23) est montée sur le montant (2) de la machine par l'intermédiaire d'une construction porteuse (51).

15. Machine-outil selon l'une des revendications 11 à 14,
caractérisée
par le fait qu'une monture cylindrique creuse (5) pour la buse (6) est montée sur la tête (3) de l'enceinte (1) de passage du rayon laser, cette monture présentant des canaux (32) pour fluide passant entre une enveloppe tronconique (30) et un noyau conique (31), ainsi qu'un trou de passage (36), central et plusieurs fois étagé, pour le passage du rayon laser (7) et pour le passage d'un gaz auxiliaire supplémentaire.

16. Machine-outil selon l'une des revendications 11 à 15,
caractérisée
par le fait qu'une monture cylindrique creuse (5) pour une buse est montée sur la tête (3), l'enceinte cylindrique creuse de cette monture se terminant dans une embouchure conique creuse et présentant des raccords ainsi que des canaux d'écoulement intérieur pour l'amenée séparée, axiale et oblique, de différents fluides sur la zone d'action du rayon laser (7) sur la pièce, un organe d'insertion (74) étant agencé dans l'embouchure (73) de l'enceinte (71) et ayant une paroi extérieure conique qui, avec la paroi intérieure conique de l'embouchure (73), délimite un canal d'écoulement (78) pour un gaz sous pression, le volume intérieur de l'organe d' insertion formant le canal d'écoulement (81), axial et se rétrécissant vers l'ouverture de la buse (80), pour un autre fluide sous pression, l'ouverture de sortie annulaire (79) du canal d'écoulement conique (78) entourant coaxialement l'ouverture de sortie centrale (80) du canal d'écoulement axial (81).

17. Machine-outil selon revendication 15,
caractérisée
par le fait que, pour une modification désirée de la section de passage du canal d'écoulement conique (78), l'organe d'insertion (74) est positionné avec possibilité de réglage en hauteur, et en étant centré sur l'axe, dans l'enceinte (71).
